# EUROPEAN PATENT APPLICATION

(11) **EP 2 028 663 A1**
(43) Date of publication of application: **25.02.2009**
(21) Application number: 07738404.8
(22) Date of filing: 13.03.2007
(51) Int. Cl.: H01F 17/00, H01F 1/34, H01F 17/04, H01F 37/00, H01F 41/04

(54) **COIL COMPONENT AND ITS MANUFACTURING METHOD**

(30) Priority: 29.03.2006 JP 2006090932; 28.12.2006 JP 2006353753
(71) Applicant: HITACHI METALS, LTD., Minato-ku, Tokyo 105-8614 (JP)
(72) Inventor: MIKAMI, Hideto, Kumagaya-shi, Saitama 360-0843 (JP); KATO, Tomotsugu, Kumagaya-shi, Saitama 360-0843 (JP); NAKADA, Miyako, Kumagaya-shi, Saitama 360-0843 (JP); NOGUCHI, Shin, Kumagaya-shi, Saitama 360-0843 (JP)
(74) Representative: HOFFMANN EITLE
(86) International application number: PCT/JP2007/054932
(87) International publication number: WO 2007/111122

(57) **Abstract**

In a coil component of the present invention, a coil member having a plurality of coil lines laminated through an insulating layer is sandwiched by hexagonal ferrite substrates, and the hexagonal ferrite substrate has anisotropy. To have the "anisotropy" means that alignment of the crystal orientation is different according to a direction of the substrate, in other words, that anisotropy is provided in the c-axis orientation of ferrite crystal grains of the hexagonal ferrite substrate. As the result of the "anisotropy", an initial magnetic permeability is also different according to direction. By using the hexagonal ferrite substrate as a magnetic substrate to sandwich the coil member so as to form a magnetic path, the initial magnetic permeability can be maintained up to a high frequency, and a high-frequency characteristic of impedance generated by the coil lines can be improved.

## Description

### Technical Field

The present invention relates to a coil component excellent in impedance characteristic at a high frequency or particularly to a coil component used as a transducer, common mode filter and the like.

### Background Art

Higher signal transmission speed and higher driving frequency have progressed in electronic equipment such as a personal computer, cellular phone and the like. For example, standards such as IEEE1394a with transmission rate of 400 Mbps and USB2.0 with transmission rate of 480 Mbps have been prevailing and higher speed HDMI (700 Mbps) and IEEE1394b (800 Mbps) are expected to come.
Coil components such as common mode filter used in these types of high-speed differential transmission need to correspond to a high frequency, small in size and the like.

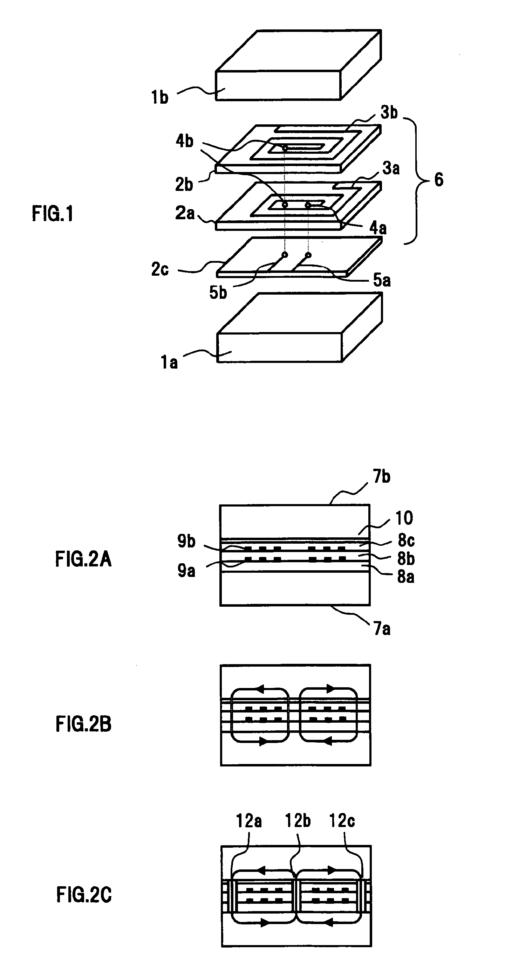

Figure 1 is an exploded perspective view illustrating a configuration example of a conventional small-sized coil component used as a transducer, common mode filter and the like. As shown in this figure, a coil component manufactured using a green-sheet laminate technology is known. This coil component is manufactured by forming a coil portion 6 comprising insulating green sheets (2a, 2b) having coil conductors (3a, 3b) provided on its surface, the coil portion 6 sandwiched between magnetic green sheets (1a and 1b), and forming external electrodes (not shown) on a side of the coil portion 6.

A through hole 4a connecting the coil conductor 3a and a lead-out electrode 5a formed on an insulating green sheet 2c constitutes a first coil line, while a through hole 4b connecting the coil conductor 3b and a lead-out electrode 5b formed on the insulating green sheet 2c constitutes a second coil line. A common mode filter using a thin film method is also known (Japanese Patent Laid-Open No. 8-203737 (Patent Document 1), Japanese Patent Laid-Open No. 2005-85800 (Patent Document 2)).

Figures 2A to 2C are sectional views of a coil component using the conventional thin film method, in which Figure 2A is a sectional view of a common mode choke coil cut-away on a plane including the center axes of coil lines (9a, 9b). A shape and layout of the coil is the same as that shown in Figure 1. This coil component is in a structure in which a lead-out electrode is formed by the thin film method on a magnetic substrate 7a and then, an insulating layer 8a, a first coil line 9a, an insulating layer 8b, a second coil line 9b, and an insulating layer 8c are sequentially formed using the thin film method and sandwiched by a magnetic substrate 7b through an adhesive layer 10 from the upper face.
When the coil lines are electrified, a magnetic force line is generated as shown in Figure 2B in this coil component.

Moreover, as shown in Figure 2C, by arranging magnetic layers 12a to 12c on an inner side and an outer side of the coil lines (9a, 9b), leakage magnetic flux can be reduced and drop in impedance of the coil component can be prevented. In Patent Document 2, for example, a mixture of polyimide resin and ferrite magnetic powder is used as the magnetic layer.

In the conventional coil component as mentioned above, Ni-Zn spinel (cubic) ferrite is mainly used as the magnetic substrate, but since the spinel ferrite has its initial magnetic permeability lowered at a relatively low frequency, an impedance at a high frequency is not necessarily sufficient. Particularly for high-speed transmission application of 800 Mbps or more as in IEEE1394b, since it is difficult to ensure sufficient impedance, the high-speed transmission application can not be handled with the conventional coil component.

The present invention has an object to provide a small-sized coil component that can exert high impedance characteristic even at a high frequency band.

### Disclosure of the Invention

A coil component of the present invention is characterized in that a coil member having a plurality of coil lines laminated through an insulating layer is sandwiched by hexagonal ferrite substrates and the hexagonal ferrite substrates have anisotropy. Here, having the "anisotropy" means that alignment of crystal orientation is different according to a direction of a substrate, in other words, that the hexagonal ferrite substrate has anisotropy in a c-axis orientation of a ferrite crystal grain. The hexagonal ferrite is a magnetic material that can maintain initial magnetic permeability up to a high frequency since it has magnetic anisotropy having a direction orthogonal to the c-axis as an easy magnetization plane. As the result of this "anisotropy", the initial magnetic permeability is different according to direction.

A hexagonal ferrite having such magnetocrystalline anisotropy can be oriented. For example, it is possible to orient Z-type ferrite since the ferrite has magnetic anisotropy having a plane orthogonal to the c-axis as the easy magnetization plane. A state where the c-axes of the hexagonal ferrite are oriented in an in-plane direction of a substrate may be evaluated by X-ray diffraction. Suppose that a plane index of a diffraction peak is (HKL), in the case of X-ray diffraction on one face of a substrate, if a ratio (Iₕₖ₀/I₀₀₁) between a diffraction peak intensity (Iₕₖ₀) from a specific plane f (hk0) in parallel with the c-axis and a diffraction peak intensity (I₀₀₁) from a specific plane (001) orthogonal to the c-axis is larger than a case of the X-ray diffraction on another plane, it can be said that the c-axes are oriented in the above in-plane direction.

Usually, the initial magnetic permeability in a non-orientation state is employed as a material characteristic, but even if there is a limit to the material characteristic in the non-orientation state, the initial magnetic permeability in a predetermined direction can be raised by orientation. By using the hexagonal ferrite substrate for a magnetic substrate sandwiching the coil member and forming a magnetic path, the initial magnetic permeability can be maintained to a higher frequency and a high-frequency characteristic of impedance generated by the coil line can be improved. Moreover, since the hexagonal ferrite substrate with anisotropy has a direction with high initial magnetic permeability and a direction with low initial magnetic permeability, by using the hexagonal ferrite substrate, the direction with high initial magnetic permeability and the direction with low initial magnetic permeability can be used selectively according to the shape / configuration of the coil member.

Also, in the coil component, the hexagonal ferrite substrate preferably has a larger initial magnetic permeability in a sandwiching direction of the coil member , i.e. a direction along which the coil member is sandwiched, than the initial magnetic permeability in a direction orthogonal to the sandwiching direction of the coil member. If a non-magnetic coil member is sandwiched, a magnetic gap easily occurs and magnetic resistance in a magnetic path in the axial direction of the coil easily becomes higher. Thus, by setting a direction where the hexagonal ferrite is oriented so as to raise the initial magnetic permeability as a coil axial direction, that is, the sandwiching direction of the coil member, entire magnetic resistance can be reduced and advantageous configuration in ensuring high impedance can be obtained. Particularly if a planar spiral line is employed, such configuration is obtained that the flat-shaped coil component is sandwiched by the hexagonal ferrite substrates, and the configuration relating to the initial magnetic permeability is suitable for such a case.

Moreover, in the coil component, the hexagonal ferrite substrate may have the initial magnetic permeability in a direction orthogonal to the sandwiching direction of the coil member substantially equal to the initial magnetic permeability in the sandwiching direction of the coil member and the initial magnetic permeability in another direction orthogonal to the sandwiching direction of the coil member smaller than the initial magnetic permeability of the sandwiching direction of the coil member. According to such configuration, magnetic resistance can be reduced not only in the sandwiching direction of the coil member but also in the direction orthogonal to that.

Also, in the coil component, the c-axes of crystal orientation are preferably oriented in an in-plane direction in the hexagonal ferrite substrate. With this configuration, contribution from c-planes with high magnetic permeability is added even to the initial magnetic permeability in the in-plane direction. Therefore, such configuration can particularly raise the magnetic permeability in a direction orthogonal to the in-plane direction and also maintain the high magnetic permeability even in directions other than the above direction, and it is advantageous in improved impedance and increase of a noise attenuation amount.

Moreover, in the coil component, the in-plane direction is preferably orthogonal to the sandwiching direction of the coil member. A crystal of the hexagonal ferrite has high magnetic permeability in a direction in the c-plane (plane orthogonal to the c-axis) and low magnetic permeability in the c-axis direction. Therefore, if the c-axes are oriented in an in-plane direction orthogonal to the sandwiching direction of the coil member, the c-planes follow the sandwiching direction of the coil member and the initial magnetic permeability in that direction is increased, which results in reduction of magnetic resistance of the entire coil member. Moreover, the orientations of the c-axes are more preferably isotropic in the in-plane direction orthogonal to the sandwiching direction of the coil member. With such configuration, the c-axis is oriented to a random direction in the in-plane direction, and even though the c-plane is also orthogonal to the in-plane direction, the orientation is at random in the in-plane direction. In this case, in the in-plane direction, an intermediate magnetic permeability between the high magnetic permeability in the direction in the c-plane and the low magnetic permeability in the c-axis direction is equally exerted, and the initial magnetic permeability does not depend on the direction in the in-plane direction. And thus, a sectional area of a magnetic path can be taken wide.

Such configuration is advantageous in reducing entire magnetic resistance and ensuring high impedance. That is, the configuration is suitable for a coil component in which a coil member having a plurality of coil lines laminated through an insulating layer is sandwiched by hexagonal ferrite substrates. Also, since the hexagonal ferrite substrate having such orientation is obtained based on molding in a simple one-direction magnetic field for orientation, by employing the above structure, manufacture of the entire coil component can be simplified and a low-cost coil component can be provided.

Also, in the above coil component, the c-axes in the crystal orientation are preferably oriented in one direction in the in-plane direction. With such configuration, since the c-plane is brought into a state of aligning in a single plane including the sandwiching direction of the coil member, particularly high magnetic permeability is exerted in the direction. Since the direction exerting the high magnetic permeability matches the axial direction of the coil, that is, the sandwiching direction of the coil member, it is particularly advantageous in reduction of the magnetic resistance of the entire coil component.

Moreover, in the above coil component, the coil member preferably has a shape, seen from the sandwiching direction of the coil component, of substantially rectangular or substantially oval and the one direction is preferably a longitudinal direction of the rectangle or the longitudinal direction of the oval of the coil member. In such configuration, low magnetic permeability of the c-axis direction is exerted in the longitudinal direction of the coil member, while high magnetic permeability in the direction in the c-plane is exerted in the sandwiching direction of the coil member and transverse direction of the coil member. Thus, a proportion of the magnetic path whose magnetic resistance is reduced becomes larger than that in a case of taking the other directions, and the entire magnetic resistance is lowered, which is advantageous configuration in ensuring higher impedance. The substantially rectangular or substantially oval here means a rectangular or oval shape for which the longitudinal direction and the transverse direction can be distinguished from each other in the substantial shapes, and a rectangle with rounded corners and distortion of a shape derived from winding ends of the coil are allowed. In order to restrain increase in an area of the coil component, a substantial rectangle is more preferable.

Moreover, in the coil component, a plurality of the coil members are preferably arranged side by side in a direction orthogonal to the direction in which the hexagonal ferrite substrates sandwich the coil members. According to such configuration, an array-type coil component can be realized while exerting the advantage attributing to the anisotropy of the hexagonal ferrite substrate.

Also, in the coil component, a plurality of the coil members are preferably arranged side by side in a direction orthogonal to the direction in which the hexagonal ferrite substrates sandwich the coil members and the hexagonal ferrite substrate preferably has the c-axes of the crystal orientations oriented in the in-plane direction orthogonal to the sandwiching direction of the coil member. With such configuration, the magnetic permeability in the sandwiching direction of the coil member is high, while the magnetic permeability in the direction orthogonal to that direction, that is, in the in-plane direction where the coil members are aligned is low. Thus, the magnetic resistance between the coil members is raised, and a flow of magnetic flux in the direction where the coil members are aligned is reduced, by which interference between the array-type coil components can be restricted.

Also, in the coil component, a plurality of the coil members are preferably arranged side by side in a direction orthogonal to the direction in which the hexagonal ferrite substrates sandwich the coil members and the hexagonal ferrite substrate preferably has the c-axes of the crystal orientations oriented in the one direction. By constituting the orientation of the hexagonal ferrite substrate and arrangements of the coil component and the hexagonal ferrite substrate so that the c-axis of the crystal orientation of the hexagonal ferrite substrate is oriented in a direction where the coil components are aligned, the easy magnetization plane is oriented in a direction orthogonal to the direction where the coil components are aligned, and a hard magnetization axis becomes a direction where the coil components are aligned. Thus, the flow of magnetic flux in the direction where the coil components are aligned is further reduced, and the interference between the array-type coil components can be restricted.

In the other coil components of the present invention, the coil member having a plurality of coil lines laminated through the insulating layer is sandwiched by the hexagonal ferrite substrates, and the hexagonal ferrite substrate is a Z-type ferrite and is characterized by the initial magnetic permeability at 1 GHz of 14 or more. Since the Z-type ferrite has high initial magnetic permeability even at a high frequency of 1 GHz, for example, the ferrite is suitable for raising the impedance of the coil component at a high frequency. Also, since by raising the initial magnetic permeability at 1 GHz of the hexagonal ferrite substrate, which is a magnetic body sandwiching the coil member, leakage magnetic flux on the end face of the coil member can be reduced, by which the magnetic body portion can be thinned and the height of the entire coil component can be lowered. By setting the initial magnetic permeability at 14 or more, the impedance characteristic of the coil component can be considerably improved as compared with the case of using the spinel ferrite.

Moreover, the coil component is a common mode filter and preferably has an attenuation amount of common mode noise at 1 GHz of 14 dB or more. Since the coil component easily obtains high impedance at a high frequency, the coil component is suitable as a common mode filter for high-speed differential transmission for which a tendency of higher frequency and lower height is progressing. The coil component having such a characteristic as a common mode filter is suitable for an application requiring a noise attenuation up to 1 GHz for high speed transmission. The attenuation amount is more preferably 18 dB or more. Also, in the coil component, the plurality of coil lines preferably have a first planar spiral line and a second planar spiral line arranged opposite to the first planar spiral line.

By providing the planar spiral line as the coil line, high impedance can be obtained with the smaller number of coil laminations, and the height of the coil can be reduced as compared with a case of forming a helical coil, by which size reduction and height lowering of the coil component can be realized. Also, a coil producing process becomes simpler than that of a multi-layer helical coil, which contributes to improved productivity and cost reduction. By setting the height of the coil component constant to the contrary, the substrate of the hexagonal ferrite can be thickened, by which leakage magnetic flux can be reduced. Also, since an interval of the hexagonal ferrites can be narrowed, it is advantageous in reducing the leakage magnetic flux. This particularly contributes to obtainment of high impedance at a high frequency of 1 GHz or more at which the initial magnetic permeability of the magnetic material should be unavoidably low.

A manufacturing method of the coil component of the present invention comprises a process of obtaining a laminate body by laminating insulating material green sheets on which a conductor of a predetermined pattern is printed, a process of obtaining a coil member by sintering the laminate body, and a process of bonding a sintered body of the hexagonal ferrite above and below the coil member. A sintering temperature for the hexagonal ferrite is higher than that for the insulating material which can be integrally sintered with a conductor such as Ag and the like. Low-temperature sintering of the hexagonal ferrite due to an additive and the like incurs drop in the initial magnetic permeability, while high-temperature sintering of the insulating material and the conductor requires expensive elements such as Pd, Pt and the like as an electrode material and raises a cost. Therefore, rather than sintering the green bodies at the same time, it is preferable to separately make sintered bodies of the coil member and the hexagonal ferrite and then, to bond them together.
An external electrode can be made by cutting into individual pieces and then, printing / curing Ag paste with a low-temperature curing resin as a binder and by sequentially forming Ni, Sn by electroless plating, for example. Such method is preferable in view of low-cost fabrication since high-temperature processing is not required.

Moreover, in the manufacturing method of the coil component, a through hole through which the coil member penetrates in the lamination direction is preferably provided on at least either one of an inner side and an outer side of a coil pattern of the coil member and filling of the through hole with the magnetic body and the bonding are carried out by an adhesive containing a magnetic body. By using an adhesive containing a magnetic body, filling of the through hole with the magnetic body and application of the adhesive for bonding of the hexagonal ferrite sintered body and the coil member can be carried out at the same time. By filling the through hole with the magnetic body, leakage of the magnetic flux can be reduced. Also, from the viewpoint of reduction of the magnetic flux leakage, the through hole is preferably provided on the inner side and the outer side of the coil pattern. Moreover, the through hole is preferably formed in the laminate body before sintering. That is because formation of the through hole is easier on the laminate body before sintering.

Another manufacturing method of the coil component of the present invention comprises a process of obtaining a laminate body by laminating an insulating material green sheet on which a conductor of a predetermined pattern is printed and a process of sintering the laminate body in a state sandwiched by sintered bodies of the hexagonal ferrite. As mentioned above, since the sintering temperature of the hexagonal ferrite is higher than that of the insulating material that can be integrally sintered with the conductor, the once-sintered hexagonal ferrite sintered body hardly shrinks even if the temperature is raised to a sintering temperature of the insulating material. Therefore, by sintering the laminate body sandwiched by such sintered bodies of the hexagonal ferrite, warping of the laminate body due to sintering or shrinkage of the laminate body in the direction of the interface with the hexagonal ferrite are restricted, which contributes to higher dimensional accuracy of the coil component. In this case, the laminate body is preferably sintered in a state pressurized by the sintered body of the hexagonal ferrite with a weight or pressurizing means.

Also, in the manufacturing method of the coil component, the laminate body is preferably obtained by printing a magnetic layer using a paste containing a magnetic body on at least part of the inner side and the outer side of a portion to be a coil pattern of the coil member in the insulating material green sheet and by laminating each insulating material green sheet contraposed by the printed magnetic layer. By using the above printing method, the magnetic layer can be formed extremely easily. By laminating the printed magnetic layer in contraposition, that is, overlapping, a pseudo magnetic path is formed between the sintered substrates of the hexagonal ferrite. Alternatively, a through hole may be provided in advance at a portion of the green sheet for the magnetic layer to be printed through which the magnetic layer penetrates.

In the manufacturing method of the coil component, a through hole is preferably provided at least either one of the inner side and the outer side of a portion to be the coil pattern of the coil component in the laminate body, and a paste containing the magnetic body is filled in the through hole and then, sintered. In this case, formation of the magnetic layer through which the coil member penetrates can be simplified.

Moreover, in the manufacturing method of the coil component, the hexagonal ferrite preferably has an easy magnetization plane and the sintered body of the hexagonal ferrite is obtained by sintering a green body obtained by molding a hexagonal ferrite powder in a one-direction magnetic field. According to this method, since the easy magnetization plane (c-plane) is oriented in parallel with one direction, that is a direction in which a magnetic field is applied, the magnetic permeability in the direction is raised, and higher performance of the coil component can be realized. On the other hand, since the easy magnetization plane is oriented at random in a planar direction orthogonal to the direction, drop in the magnetic permeability in the planar direction can be restrained. As the hexagonal ferrite, Z-type ferrite is preferable since the Z-type ferrite has a high initial magnetic permeability even at a high frequency of 1 GHz, for example.

An applied magnetic field at the molding may be a rotating magnetic field. That is, in the manufacturing method of the coil component, the hexagonal ferrite has an easy magnetization plane and the sintered body of the hexagonal ferrite is preferably obtained by sintering a green body obtained by orienting and molding the hexagonal ferrite powder in the rotating magnetic field. According to such method, since the easy magnetization plane can be oriented in one direction, that is, can be aligned in a planar direction orthogonal to an axis of the rotating magnetic field, the magnetic permeability in the in-plane direction can be particularly raised and higher performance of the coil component can be realized.

According to the present invention, a small-sized and low-height coil component excellent in impedance characteristic at a high frequency, or a coil component particularly suitable for a transducer, common mode filter and the like and a manufacturing method of the same can be provided.

### Brief Description of the Drawings

Figure 1 is an exploded perspective view illustrating a coil component using a conventional green sheet laminating technology;
Figures 2A to 2C are sectional diagrams of a coil component using a conventional thin film method;
Figure 3 is an exploded perspective view illustrating a first embodiment of a coil component of the present invention;
Figure 4 is an exploded perspective view illustrating a second embodiment of a coil component of the present invention;
Figure 5 is an outline diagram of a section of the second embodiment of the coil component of the present invention;
Figure 6 is an exploded perspective view illustrating a third embodiment of a coil component of the present invention;
Figure 7 is an outline diagram of a section of the third embodiment of the coil component of the present invention;
Figures 8A and 8B are schematic diagrams illustrating an oriented state in a sintered body, in which Figure 8A shows a case of "one-way oriented" state and Figure 8B shows a case of "planar oriented" state, which will be described later;
Figure 9 is an exploded perspective view illustrating a fourth embodiment of a coil component of the present invention;
Figure 10 is an appearance perspective view of a common mode filter of the fourth embodiment of a coil component of the present invention;
Figure 11 is a graph illustrating frequency characteristics of initial magnetic permeability of a ferrite sample obtained in an example 1 and a comparative example 1;
Figure 12 is a graph illustrating the frequency characteristics of the initial magnetic permeability of a Z-type ferrite sample obtained in an example 2 and the example 1;
Figure 13 is a graph for explaining a result evaluating the frequency characteristics of common mode impedance (Zc) of the common mode filter with a structure in Figure 4 and the differential impedance (Zd) of the Z-type ferrite having a characteristic in Figure 11 by simulation; and
Figure 14 is a graph illustrating a frequency characteristic of a noise attenuation amount when the common mode filter is fabricated using a ferrite in an example 4.

### Best Mode for Carrying Out the Invention

Embodiments of the present invention will be described below referring to the attached drawings but the present invention is not necessarily limited to these embodiments.

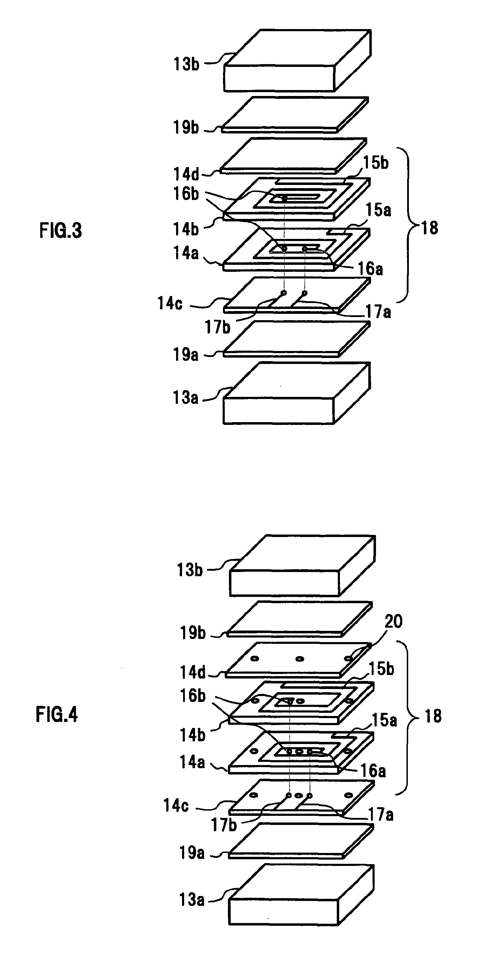

First embodiment: Figure 3 is an exploded perspective view illustrating a first embodiment of a coil component of the present invention. The coil component of the present embodiment is a common mode choke coil, but the coil component of the present invention is not limited to the common mode choke coil, but choke coils and transducers for other applications may be used, and size reduction and improvement in frequency characteristics of these coil components can be realized.

In the coil component shown in Figure 3, a coil member 18 having a plurality of coil lines (15a, 15b) laminated through a nonmagnetic insulating layer 14b is sandwiched by hexagonal ferrite substrates (13a, 13b) constituted by a sintered body. As shown in Figure 3, the hexagonal ferrite substrates (13a, 13b) having a flat-plate, rectangular solid shape sandwich the coil member 18 in a direction of a winding axis of a coil. With the configuration shown in Figure 3, the coil member is further provided with an insulating layer 14c having lead lines (17a, 17b) arranged on one side of the laminated coil lines, that is, on the lower side of the insulating layer 14a and an insulating layer 14d on the other side. The coil member 18 and the hexagonal ferrite substrates (13a, 13b) are bonded through adhesive layers (19a, 19b).

In the coil component, a portion performing a function of a common mode choke coil or transducer may be formed singularly or in plural. If the portions are formed in plural, an array-type coil component is formed. The array-type coil component will be described in detail later.

With the configuration shown in Figure 3, the coil lines (15a, 15b) are planar spiral lines formed on the surface of the insulating layers (14a, 14b), respectively, and arranged opposite to each other. The coil lines (15a, 15b) are planar spiral lines with a rectangular outline shape and wound in a spiral state while bending at 90°. Inner coil ends of the coil lines (15a, 15b) are connected to the lead lines (17a, 17b) via through holes (16a, 16b). The coil lines are not limited to the spiral lines as shown in Figure 3 but may be helical lines obtained by laminating conductor patterns. However, for lower height (thinner coil component) and the like, the planar spiral lines are preferable.

The hexagonal ferrite substrates (13a, 13b) are fabricated separately from the coil member. That is because if the coil component is to be formed by sintering them all in a single body, the hexagonal ferrite used in the substrate requires composition change, additive addition at the expense of magnetic characteristics for low-temperature sintering. By fabricating the hexagonal ferrite substrate separately, a substrate with a magnetic characteristic, particularly a high initial magnetic permeability µ₁ at a high frequency can be applied. The hexagonal ferrite substrate may be a single crystal substrate as well as a sintered body substrate.

If a sintered body substrate of the hexagonal ferrite is to be fabricated separately as a substrate, since co-firing with the coil component is not needed, a sintered body density can be sufficiently raised. Thus, strength of the substrate is improved and nonconformity such as damage during element assembling can be reduced. If a sintered body substrate is used as the hexagonal ferrite substrate, the sintered body density is preferably 4.8 × 10³ kg/m³ or more in order to ensure sufficient strength. The density is more preferably 5.0 × 10³ kg/m³ or more, or further preferably 5.1 × 10³ kg/m³ or more.

Use of the hexagonal ferrite substrate with high magnetic characteristics as a magnetic substrate is advantageous in leakage restraint of magnetic flux and contributes to restraint of leakage of magnetic flux particularly if a magnetic path of the coil component constitutes an open magnetic path. Since use of the planar spiral line leads to reduction of a magnetic gap in a magnetic path, the configuration is preferable for higher performance of the small-sized and low-height (thin) coil component together with employment of the hexagonal ferrite substrate.

Next, a manufacturing method of the coil member will be described. The coil member may be fabricated using a usual green sheet method, for example. The coil member is fabricated via a process of obtaining a laminate body by laminating insulating material green sheets on which a conductor with a predetermined pattern is printed and a process of obtaining the coil member by sintering the laminate body.

Explanation will be made specifically referring to Figure 3. An insulating material green sheet on which a conductor is printed on the surface so as to form the lead lines (17a, 17b), the coil line 15a and the coil line 15b, respectively and an insulating material green sheet on which the conductor is not printed are laminated in the order shown in Figure 3 so as to have a laminate body, and the laminate body is sintered to obtain the coil member 18. Through holes (16a, 16b) are formed by laser beam at portions corresponding to the coil ends inside the coil lines (15a, 15b) of the insulating material green sheet, a conductor is filled in these through holes to have them connect with the lead lines (17a, 17b).

As the insulating material for a green sheet, dielectric ceramics and the like may be used. From the viewpoint of reduction in parasitic capacity, a dielectric material with relative permittivity of 15 or less is preferably used. For example, a material with A1, Si, Sr as a main component and Ti, Bi, Cu, Mn, Na, K as a sub component, a material with A1, Si, Sr as a main component and Ca, Pb, Na, K as a sub component, a material containing A1, Mg, Si, Gd, a material containing A1, Si, Zr, Mg and the like may be used.

Also, as the conductor forming the coil lines and the like, a conductive paste such as Ag, Ag-Pd, Pt, Ni and the like may be used. Alternatively, the coil component may be constituted by using HTCC (High-Temperature co-fired Ceramic) technology with an insulating material having Al₂O₃ as a main component and a conductor as a metal conductor capable of sintering at a high temperature such as tungsten (W), molybdenum (Mo) and the like. Alternatively, the coil member can be constituted by using a resin laminated substrate or a complex material obtained by mixing resin and a ceramic dielectric powder as an insulating material.

The coil member may be fabricated using a thin film process or a printed substrate process using the photolithography and the like. After a conductor film is formed by sputtering and the like on an insulating layer such as a resin including polyimide resin and epoxy resin or a dielectric ceramics, a photo resist is formed on the conductor film. Exposure is conducted by using a photo mask on which a pattern of a coil line is formed. Moreover, after the unexposed resist is removed, the conductor on a portion other than the pattern of the coil line is removed by etching. Then, by removing the resist, the coil line is formed. An insulating material is further formed thereon so as to obtain the coil member.
In such a method, by forming the coil component on the hexagonal ferrite substrate, part of a bonding process of the coil component and the hexagonal ferrite substrate can be omitted.

Moreover, the coil member and the sintered body substrate of the hexagonal ferrite are bonded through the adhesive layers (19a, 19b), which is a layer of an adhesive. There is no particular limitation on an adhesive to be used, but a thermosetting resin can be used, for example. After bonding, via a process of cutting and the like, an external electrode is provided at a portion of the lead lines on the coil so as to have the coil component.

Alternatively, the bonding of the coil member and the hexagonal ferrite substrate may be realized by sintering in a state where the laminate body is sandwiched by the hexagonal ferrite substrates after the process of obtaining the laminate body by the green sheet method as mentioned above. Even with such method, the coil component in which the coil member and the hexagonal ferrite substrate are integrated can be obtained. The sintering temperature of the laminate body is set approximately at 700 to 900°C in compliance with a melting temperature of the conductor such as Ag. The sintering temperature of the hexagonal ferrite substrate is usually approximately 1200 to 1300°C. Thus, even if the hexagonal ferrite substrate and the laminate body are sintered together at a temperature suitable for the laminate body, the characteristics of the hexagonal ferrite substrate are hardly affected. Also, at such temperature, the hexagonal ferrite substrate hardly shrinks. Therefore, the contraction of the laminate body in the in-plane direction is restricted by the hexagonal ferrite substrate, and dimensional accuracy can be also improved. A layer enriched with a low melting-point glass component such as a glass adhesive may be sandwiched between the laminate body and the hexagonal ferrite substrate and sintered in order to improve close contact.

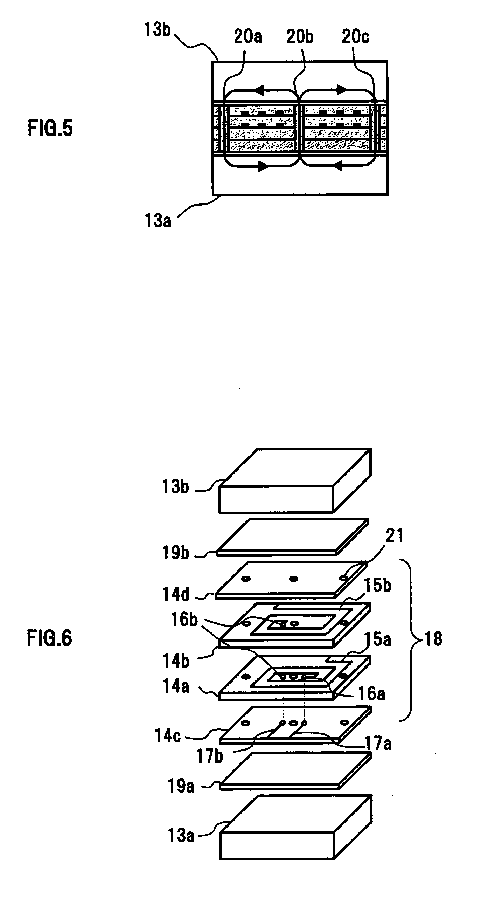

Second embodiment: Figures 4 and 5 are views for explaining a second embodiment of the coil component of the present invention, in which Figure 4 is an exploded perspective view of the coil component of this embodiment and Figure 5 is an outline diagram of the coil component. In Figure 5, the through holes (16a, 16b) are not shown. Also, in Figures 4 and 5, the same reference numerals are given to the same members as those in the first embodiment. The coil component of this embodiment has a magnetic layer 20b inside the coil line and magnetic layers 20a and 20c on the outside in addition to the configuration of the above first embodiment. Specifically, the magnetic layers 20a, 20b, and 20c penetrate the coil member 18 in the laminate direction. Such configuration will be described below using the exploded perspective view in Figure 4. The configuration other than the magnetic layer 20 is the same as that of the first embodiment, and the explanation will be omitted.

The magnetic layer 20 penetrating the insulating layer 14a is formed on the inner side and the outer side of the coil line 15a of the insulating layer 14a, and the magnetic layer 20 similarly penetrating the insulating layer 14b is formed at a position corresponding to the magnetic layer 20 formed on the insulating layer 14a on the inner side and the outer side of the coil line 15b of the insulating layer 14b. Moreover, on the insulating layers 14c and 14d, too, the magnetic layer 20 penetrating the insulating layers 14c, 14d is formed at a position corresponding to the magnetic layer 20 formed on the insulating layers 14a and 14b. In the coil member 18 on which the insulating layers 14a, 14b, 14c, and 14d are laminated, the magnetic layers 20a, 20b, and 20c are configured to penetrate the coil member 18 in the laminate direction, as shown in Figure 5.

An arrow in Figure 5 shows a flow of magnetic flux, and by providing the magnetic layer penetrating the coil member in the laminate direction, the flow of magnetic flux between the hexagonal ferrite substrates are focused in the magnetic layer, by which drop in impedance by leakage of the magnetic flux can be restrained. From the viewpoint of restraint of the leakage of magnetic flux, it is only necessary that the magnetic layer is present at least at a part of the inner side and the outer side of the coil line. The positions and number of the magnetic layers are not necessarily limited to those shown in Figures 4 and 5, and a sectional shape in a direction orthogonal to the penetrating direction is not limited to circular but may be rectangular or irregular. In order to restrain the leakage of magnetic flux, a sectional area of the magnetic path is preferably enlarged by increasing the number of the magnetic layers. The magnetic layer may be provided in any mode of the inner side, the outer side, the inner side and the outer side of the coil line, but from the viewpoint that a substantially closed magnetic path can be constituted, the magnetic layer penetrating the coil member is preferably provided on the inner side and the outer side of the coil line.

With regard to the manufacturing method of the above coil component having the magnetic layer penetrating the coil member, an example using the green sheet method also explained in the first embodiment will be illustrated. Since the forming method of those other than the magnetic layer such as the coil line, bonding with the hexagonal ferrite substrate and the like have been already explained in the first embodiment and the explanation will be omitted. In the insulating material green sheet constituting the insulating layers 14a, 14b, 14c, and 14d, the through holes are formed by laser beam at corresponding positions in order to provide the magnetic layer 20. A paste containing a magnetic body (hereinafter referred to as "magnetic material paste") is filled in the through hole by screen printing and the like. Before or after the filling of the magnetic material paste, a conductor pattern such as the coil line is formed by screen printing of the conductor. The green sheet in which the magnetic material paste has been filled and the conductor has been printed is laminated and sintered so as to obtain the coil member through which the magnetic layer penetrates in the laminate direction. For the magnetic material paste, a low-temperature sintering type Ni-Cu-Zn ferrite or Y-type ferrite may be used.

Alternatively, the magnetic material paste may be filled in the through hole after the laminate body is fabricated by laminating the insulating material green sheet similarly to the first embodiment and then, providing the through hole at least at either one of the inner side or the outer side of a portion to be a coil pattern in this laminate body. By sintering after filling the magnetic material paste, the coil component is obtained. In this case, a process of forming a through hole is eliminated and productivity is improved.

Next, an example of another manufacturing method of the above coil component having the magnetic layer penetrating the coil member will be illustrated. Similarly to the first embodiment, the laminate body of the green sheet in which the conductor pattern such as the coil line is constituted is fabricated. The through holes are formed by laser beam at portions to be the inner side and the outer side of the coil line of the obtained laminate body and then, by sintering the laminate body, the through hole is provided at the coil member. Adhesion between the obtained coil member and the hexagonal ferrite substrate is conducted by an adhesive containing a magnetic body. In this case, when applying the adhesive, the adhesive is filled also in the through hole. By having the magnetic body contained in the adhesive as a filler, such configuration can be obtained that the magnetic layer is provided in the through hole. As the magnetic body contained in the adhesive, a powder of Ni-Zn ferrite, hexagonal ferrite and the like may be used, for example.

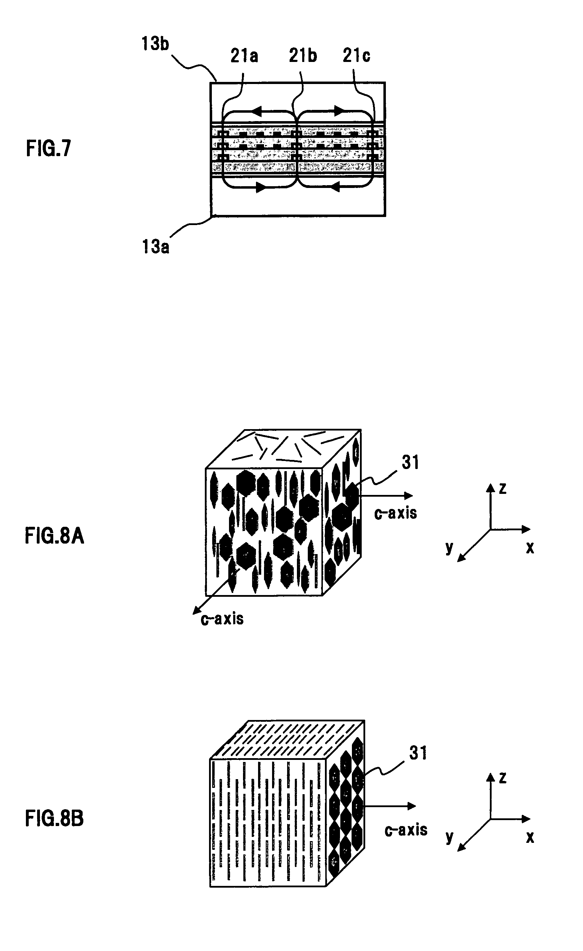

Third embodiment: Figures 6 and 7 are diagrams for explaining a third embodiment of the coil component of the present invention, in which Figure 6 is an exploded perspective view of the coil component of the third embodiment and Figure 7 is an outline diagram of a section of the coil component. These figures show another example in which a magnetic layer is provided at least at a portion of the inner side and the outer side of the coil line. In Figure 7, the through holes (16a, 16b) are not shown. Also, in Figures 6 and 7, the same reference numerals are given to the same members as those in the first and second embodiments.

In this embodiment, in addition to the configuration of the above first embodiment, a magnetic layer 21b on the inner side and magnetic layers 21a and 21c on the outer side of the coil line are provided. Specifically, the magnetic layers 21a, 21b, and 21c are formed by being laminated alternately with the insulating layer in the laminate direction of the coil member 18, that is, the direction where the coil member is sandwiched by the hexagonal ferrite substrates, respectively. In Figure 7, a row of the magnetic layers 21 in the laminate direction in Figure 6 is called separately as the magnetic layers 21a, 21b, and 21c. Such configuration will be explained using the exploded perspective view in Figure 6. Since the configuration other than the magnetic layer 21 is the same as that of the first and second embodiments, the explanation will be omitted.

The magnetic layer 21 is formed on the inner side and the outer side of the coil line 15a of the insulating layer 14a, and on the inner side and the outer side of the coil line 15b of the insulating layer 14b, the magnetic layer 21 is similarly formed at a position corresponding to the magnetic layer 21 formed on the insulating layer 14a. Moreover, the magnetic layer 21 is formed on the insulating layers 14c and 14d at a position corresponding to the magnetic layer 21 formed on the insulating layers 14a and 14b. A difference from the above second embodiment is that the magnetic layer 21 does not penetrate each insulating layer. In the coil member 18 in which the insulating layers 14a, 14b, 14c, and 14d are laminated, as shown in Figure 7, the insulating layer and the magnetic layer are alternately formed in the laminate direction of the coil member 18 either on the inner side or the outer side of the coil line so as to constitute the magnetic layers 21a, 21b, and 21c.

An arrow in Figure 7 shows a flow of magnetic flux, and by alternately providing the magnetic layer and the insulating layer in the laminate direction of the coil member, the flow of magnetic flux between the hexagonal ferrite substrates are focused in the magnetic layer, by which drop in impedance by leakage of the magnetic flux can be restrained. In this embodiment, the magnetic layer does not penetrate the coil member, but by providing a row of the magnetic layers between the sintered body substrates of hexagonal ferrite, a distance between the magnetic bodies is made small. According to such configuration, since the magnetic flux is guided to the vicinity of the row of the magnetic layers, leakage of the magnetic flux and drop in impedance can be restrained. The magnetic layers do not necessarily have to form a row of a plurality of magnetic layers, but the effect can be obtained only by at least one magnetic layer between the hexagonal ferrite substrates. However, in order to make the distance between the magnetic bodies small and to reduce the leakage of magnetic flux, the number of the magnetic layers is preferably plural or more.

With regard to a manufacturing method of the coil component according to the third embodiment, an example using the green sheet method explained in the first and second embodiments will be illustrated. The forming method of those other than the magnetic layer such as the coil line, bonding with the hexagonal ferrite substrate and the like are the same as those explained in the first embodiment, and the explanation will be omitted.

On each insulting material green sheet constituting the insulating layers 14a, 14b, 14c, and 14d, the magnetic layer 21 is printed using the magnetic material paste at a corresponding position at least at a part of the inner side and the outer side of a portion to be a coil pattern of the coil member. Before or after the printing of the magnetic material paste, a conductor pattern of the coil line and the like is formed by screen printing of the conductor. The green sheet on which the magnetic material paste has been printed and the conductor has been printed is laminated with the printed magnetic layer opposed so as to obtain the laminate body. By sintering the laminate body, the coil member in which the magnetic layer and the insulating layer are alternately laminated in the laminate direction of the green sheet is obtained. As the magnetic material paste, those shown in the second embodiment may be used. With such method, the through hole does not have to be provided and the number of magnetic layers can be small, and defects and the like hardly occur in integral sintering, which is high in reliability.

As the hexagonal ferrite substrate used in the present invention, sintered body substrate such as Z-type ferrite, Y-type ferrite and the like can be used. Selection from these hexagonal ferrites may be made according to a frequency band to be used and the like. A high initial magnetic permeability µᵢ to a high frequency is maintained in the order of the Z-type ferrite and Y-type ferrite. Among them, since the Z-type ferrite maintains the high initial magnetic permeability µᵢ approximately up to 1 GHz and moreover, the initial magnetic permeability µᵢ is the highest in the above hexagonal ferrites, it is suitable for a coil component such as a common mode filter assuming use in a frequency band of 1 GHz or more. As the Z-type ferrite, Co₂Z type represented by Ba₃Co₂Fe₂₄0₄₁ is excellent in a high-frequency characteristic of the initial magnetic permeability µᵢ and preferable.

The Z-type ferrite does not necessarily have to be in a single phase. The Z-type ferrite might include a different phase, and the present invention allows such a case and also calls it the Z-type ferrite even including the different phase. However, in order to obtain the high initial magnetic permeability µᵢ, the Z-type ferrite is preferably set as a main phase. To set the Z-type ferrite as the main phase means that a peak with the largest peak intensity in powder X-ray diffraction is the Z-type ferrite.

Composition of main components of the Z-type ferrite is preferably BaO of 17 to 21 mol% and CoO of 6 to 13 mol% with the remainder of Fe₂O₃. If BaO is less than 17 mol%, a high sintered-body density and initial magnetic permeability µᵢ can not be obtained, while if 21 mol% is exceeded, the different phase is generated in a large quantity and the initial magnetic permeability µᵢ is considerably lowered. From a viewpoint of obtaining the high sintered-body density and initial magnetic permeability µᵢ, 17.7 to 21 mol%, which is Ba-richer than stoichiometric composition, is preferable. On the other hand, if CoO is less than 6 mol%, the initial magnetic permeability µᵢ and high-frequency characteristics of the Z-type ferrite are deteriorated, while if 13 mol% is exceeded, the different phase is generated and the initial magnetic permeability µᵢ is deteriorated.

Moreover, 0.05 to 1.0 mass% in Li₂Co₃ conversion of Li, 0.05 to 0.5 mass% in SiO₂ conversion of Si, and 0.05 to 5 mass% in Mn₃O₄ conversion of Mn are preferably contained in the main component. Si shows a complex-contained effect with Li even in a small quantity and an effect of increase in volume resistivity are shown, but with less than 0.05 mass% in SiO₂ conversion, these substantial effects are not exerted, while if 0.5 mass% is exceeded, the volume resistivity is not improved and the initial magnetic permeability µᵢ and sintered-body density are lowered, and thus, a range of 0.05 to 0.5 mass% is preferable.

Containing of Li not only improves the sintered-body density but can maintain and improve the initial magnetic permeability µᵢ However, if the content is less than 0.05 mass% in the Li₂Co₃ conversion, a substantial effect is not recognized. On the other hand, if 1.0 mass% is exceeded, over-sintering easily occurs and in addition, a drop in the initial magnetic permeability µᵢ becomes larger to the contrary.

Containing of Mn₃O₄ in a small quantity increases the volume resistivity, but with less than 0.05 mass%, a substantial effect is not exerted. On the other hand, with increase of the content of Mn₃O₄, the volume resistivity is increased but with the content exceeding 5 mass%, the sintered body density is remarkably lowered, which makes sintering difficult. By containing Mn, Si, and Li in complex, a ferrite sintered body with high density, high initial magnetic permeability, and high resistivity at the same time is realized, and a ferrite sintered body with the initial magnetic permeability µᵢ of 14 or more and the volume resistivity p of 10⁴ Ω·m or more can be provided. Particularly if a coil component is to be constituted using the hexagonal ferrite, since an external electrode relates to the hexagonal ferrite, the volume resistivity p is preferably 10⁴ Ω·m or more from the viewpoint of ensuring insulation properties.

By using the Z-type ferrite as the hexagonal ferrite and setting the initial magnetic permeability µᵢ at 1 GHz at 14 or more, which can not be obtained by a spinel ferrite represented by the Ni-Zn ferrite, a coil component having a high impedance characteristic, which can not be realized conventionally, can be obtained.

Since the Z-type ferrite and Y-type ferrite have in-plane anisotropy, when a sintered body for substrate is to be fabricated, it is possible to orient the ferrites using a magnetic field so that a ferrite having anisotropy can be constituted. Using the Z-type ferrite as an example, a ferrite having anisotropy will be further explained.

A preferable mode of the Z-type ferrite is constituted so that the initial magnetic permeability in the sandwiching direction of the coil member (vertical direction in Figure 3) is larger than the initial magnetic permeability in the direction orthogonal (lateral direction in Figure 3) to the sandwiching direction of the coil member. That is, anisotropy is given to the initial magnetic permeability of the Z-type ferrite substrate. For the application such as a common mode choke coil requiring low height (thinness), the hexagonal ferrite substrate needs to be configured thin and flat even with the configuration of the coil component of the present invention.

As shown in Figure 5 or 7, the magnetic flux generated at the coil flows in the hexagonal ferrite substrate in a direction orthogonal to the sandwiching direction of the coil member, but the hexagonal ferrite substrate is configured thin and flat and moreover, if the nonmagnetic coil member is sandwiched, a magnetic gap can occur easily. In this case, the magnetic resistance in the magnetic path in the axial direction of the coil is raised, and the magnetic flux easily leaks outside the substrate. Therefore, by setting the direction with orientation so as to raise the initial magnetic permeability as the axial direction of the coil, that is, the sandwiching direction of the coil member, which makes configuration advantageous in reducing the entire magnetic resistance and ensuring high impedance.

As mentioned above, the Z-type ferrite and Y-type ferrite have the magnetic anisotropy with easy magnetization direction oriented to a plane orthogonal to the c-axis and can be oriented. Therefore, the c-axes of the crystal orientation can be oriented in a direction of one in-plane direction and the initial magnetic permeability can have the anisotropy. Also, since the initial magnetic permeability can be drastically improved without lowering the high frequency characteristic by orientation, it is particularly effective if the magnetic body is flat as above. By orientation, the initial magnetic permeability of 14 or more and moreover, 20 or more at 1 GHz can be obtained, which greatly contributes to improvement of the impedance characteristic.

As configuration in which the direction with orientation for improved initial magnetic permeability is the axial direction of the coil, that is, the sandwiching direction of the coil member, the configuration as follows can be employed, for example. By employing the configuration in which the c-axes of the Z-type ferrite or Y-type ferrite are oriented in an in-plane direction orthogonal to the sandwiching direction of the coil member, the direction with high initial magnetic permeability becomes the sandwiching direction of the coil member. In the configuration with such orientation, the c-plane is parallel with one direction and corresponds to the configuration obtained by molding in a magnetic field in a DC magnetic field (one-way magnetic field), which will be also referred to as the "one-direction orientation" below.

Figures 8A and 8B are schematic diagrams illustrating an oriented state in a sintered body, in which Figure 8A shows a case of "one-direction orientation" state and Figure 8B shows a case of "planar orientation" state, which will be described later.

In Figure 8A showing a case of the "one-direction orientation" state, a hexagonal plane of a hexagonal plate-like particle 31 is the c-plane. In Figure 8A, the z-direction is an applied magnetic-field direction in the magnetic field molding, and the c-plane, which is the easy magnetization plane of the particle of the hexagonal ferrite is parallel with the z-direction. In this case, since a binding force by the magnetic field does not work on the xy in-plane direction, the orientation of the c-plane is at random with respect to the xy in-plane direction. Thus, the c-axis direction orthogonal to the c-plane is oriented substantially at random in one in-plane direction (xy plane). In the above case, regardless of the direction of c-axis orientation in the in-plane direction orthogonal to the sandwiching direction of the coil member, the magnetic permeability in the sandwiching direction of the coil member is raised.

The in-plane direction in which the c-axes are oriented raises the impedance not only in the in-plane direction orthogonal to the sandwiching direction of the coil member but also in the other in-plane directions and has an effect to increase the noise attenuation amount. However, the c-axes are particularly preferably oriented in the in-plane direction orthogonal to the sandwiching direction of the coil member from the viewpoint of increase in the noise attenuation amount. Moreover, if the orientations of the c-axes are at random, that is, isotropic in the in-plane direction orthogonal to the sandwiching direction of the coil member, an intermediate magnetic permeability between the high magnetic permeability in the direction in the c-plane and the low magnetic permeability of the c-axis direction is uniformly exerted, and since the initial magnetic permeability does not depend on a direction in the in-plane direction, a sectional area of the magnetic path with low magnetic resistance can be taken wider.

Also, as another form in which the direction with orientation for higher initial magnetic permeability becomes the coil axial direction, that is, the sandwiching direction of the coil member, configuration as follows can be employed, for example. By employing the configuration in which the c-axes of the crystal orientation are oriented in one direction in one in-plane direction orthogonal to the sandwiching direction of the coil member, the direction with high initial magnetic permeability becomes one in-plane direction including the sandwiching direction of the coil member.

This configuration is different from the above configuration in a point that the c-axes are oriented in one direction in one in-plane direction orthogonal to the sandwiching direction of the coil member. Such configuration is a form in which the c-planes are oriented in parallel with one plane including the sandwiching direction of the coil member and corresponds to an oriented state obtained by the magnetic field molding in the rotating magnetic field, which will be referred to as "planar orientation" below.

In Figure 8B showing a case of the "planar orientation" state, the yz direction is the magnetic-field applied direction in the rotating magnetic field in the magnetic field molding, and the hexagonal plane of the hexagonal plate-like particle 31 is the c-plane. In this case, since the binding force of the c-plane works in the yz in-plane direction, the c-plane, which is the easy magnetization plane of the particle in the hexagonal ferrite becomes parallel with the yz direction. As a result, the c-axis direction orthogonal to the c-plane is further oriented in one direction (x direction) in the one in-plane (xy plane) direction. In the above case, the initial magnetic permeability in the sandwiching direction of the coil member is raised and at the same time, since orientation is set so that the c-plane becomes parallel in the direction orthogonal to the one direction, the initial magnetic permeability in the direction is also raised.

In other words, such configuration is provided that the hexagonal ferrite substrate has the initial magnetic permeability in one direction in the substrate plane orthogonal to the sandwiching direction of the coil member substantially equal to the initial magnetic permeability in the sandwiching direction of the coil member, and the initial magnetic permeability in another direction of the substrate plane orthogonal to the sandwiching direction of the coil member is smaller than the initial magnetic permeability in the sandwiching direction of the coil member.

Therefore, such a magnetic path portion is formed in which the initial magnetic permeability is also high in the direction orthogonal to the sandwiching direction of the coil member, that is, in the in-plane direction of the coil member and the magnetic resistance is low. In this case, the shape of the coil member on a plane seen from the sandwiching direction of the coil member is made substantially rectangular or substantially oval and the one direction is preferably a longitudinal direction of the rectangle or the longitudinal direction of the oval of the coil member.

With such configuration, a low magnetic permeability is exerted in the c-axis direction in the longitudinal direction of the coil member, while high magnetic permeability in-plane direction of c-plane is exerted in the sandwiching direction of the coil member and in the transverse direction of the coil member, and a sectional area of the magnetic path becomes larger in the transverse direction of the coil member. Thus, rather than taking the one direction in another direction, taking the one direction in the rectangular or oval longitudinal direction so that the in-plane direction of the c-face is oriented in the rectangular transverse direction or oval transverse direction increases a proportion of the magnetic path in which magnetic resistance is reduced, and the configuration becomes advantageous in reducing the entire magnetic resistance and ensuring high impedance.

The configuration in which the easy magnetization plane is oriented in parallel with the sandwiching direction of the coil member mentioned above is suitable for the coil component in which the coil member is sandwiched by the hexagonal ferrite substrates. That is, even though the coil component is not constituted by a completely closed magnetic path, the leakage magnetic flux can be reduced and high impedance can be ensured. For example, the configuration is effective if the magnetic path relating to the coil component is an open magnetic path or if the outer circumference side of the coil line is not fully surrounded by the magnetic body, that is, if the magnetic body is arranged partially. The configuration in which no magnetic body is provided other than the magnetic body sandwiching the coil line is particularly effective in simplifying the process.

Also, the oriented hexagonal ferrite substrate may be further provided in an overlapping manner outside the hexagonal ferrite substrate. By providing the Z-type or Y-type hexagonal ferrite substrate with the c-axis oriented in the sandwiching direction of the coil member and the c-plane oriented in a direction orthogonal to the direction outside so as to provide anisotropy with which the initial magnetic permeability in the direction orthogonal to the sandwiching direction of the coil member is raised, leakage of the magnetic flux in the sandwiching direction of the coil member can be restrained, and a magnetic substrate suitable for flat configuration is obtained. In the case of a closed magnetic path by providing a magnetic body between the hexagonal ferrite substrates or if the magnetic path in the direction orthogonal to the sandwiching direction of the coil member is particularly long, it is possible to use the hexagonal ferrite substrate in which the c-axis is oriented in the sandwiching direction of the coil member and the c-plane is oriented in the direction orthogonal to the direction as the hexagonal ferrite substrate sandwiching the coil member.

The array-type coil component can be constituted by arranging a plurality of the coil members side by side in a direction orthogonal to the direction where the hexagonal ferrite substrates sandwich the coil member.

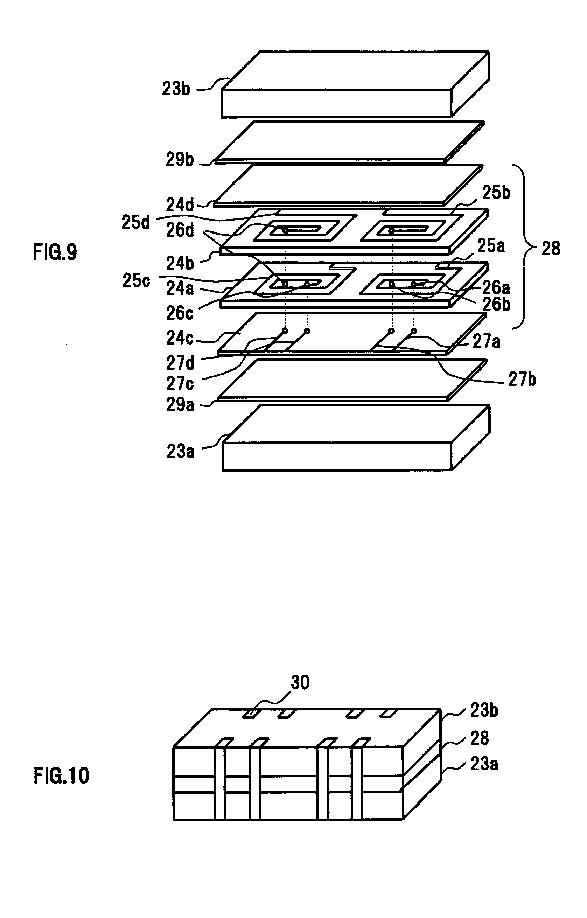

Fourth embodiment: Figure 9 is an exploded perspective views showing an embodiment of the array-type coil component, which is a fourth embodiment of the coil component of the present invention. In this embodiment, a common mode filter is used as an example of the coil component for explanation. Since the configuration is the same as that shown in Figure 3 except that a plurality of coil members are arranged side by side, the explanation will be omitted. In the configuration shown in Figure 9, the coil members are bonded to the rectangular solid hexagonal ferrite substrates 23a and 23b through the adhesive layers (29a, 29b). The coil member having the coil lines (25a, 25b) and the coil member having the coil lines (25c, 25d) are provided side by side in the direction orthogonal to the direction where the hexagonal ferrite substrates 23a and 23b sandwich the coil member 28, that is, in the longitudinal direction of the rectangular solid.

Here, a pair of the coil lines 25a and 25b constitute a single common mode filter coil and a pair of coil lines 25c and 25d similarly constitute a single common mode filter coil. In the configuration shown in Figure 9, in the coil of each common mode filter, the coil lines 25a to 25d, the through holes 26a to 26d, the nonmagnetic insulating layers 24a to 24c constituting the lead-out electrodes 27a to 27d, and the insulating layer 24d as a spacer are laminated and integrated so as to form the coil member 28. Similarly to the other embodiments, the insulating layer 24d as the spacer may be omitted. Other than the plurality of coil members integrated as in the configuration shown in Figure 9, a coil member constituted separately may be also used. However, for simplification of the process, the coil member constituted integrally is preferably used.

Figure 10 is an appearance perspective view of the array-type common mode filter of this embodiment. The lead lines 27a to 27d are connected to the external electrode formed on both side faces orthogonal to the longitudinal direction of the coil component. The external electrodes are arranged side by side along the longitudinal direction on both side faces. In Figures 9 and 10, the common mode filter array in which two coil members exerting a function of the common mode filter are arranged side by side is shown but the number of the coil members may be three or more.

Also, in the above configuration in which the plurality of coil members are arranged side by side in one direction orthogonal to the direction where the hexagonal ferrite substrates sandwich the coil member, by using the substrates in which the c-axis of the crystal orientation is oriented in an in-plane direction orthogonal to the sandwiching direction of the coil member as the hexagonal ferrite substrates 23a and 23b, the configuration is suitable for an array-type common mode filter. As mentioned above, since the Z-type ferrite or Y-type ferrite has magnetic anisotropy in which the easy magnetization direction points to a plane orthogonal to the c-axis, if the c-axes of the crystal orientation are oriented in the in-plane direction orthogonal to the sandwiching direction of the coil member, the magnetic permeability in the sandwiching direction of the coil member is high, while the magnetic permeability in the direction orthogonal to that direction, that is, the in-plane direction in which the coil members are aligned is low. The common mode filter having such configuration exerts excellent characteristics as mentioned above.

If the array type is to be realized by sharing a single magnetic material such as the hexagonal ferrite substrates 23a, 23b for size reduction, the magnetic flux easily goes around to the magnetic path of the other common mode filter. Such going-around of the magnetic flux might cause cross talk. By raising the magnetic permeability in the sandwiching direction of the coil member and by lowering the magnetic permeability in the direction orthogonal to that direction against that going-around, interference between the array-type coil components can be restrained. The configuration in which the direction with raised initial magnetic permeability by orientation is the sandwiching direction of the coil member, that is, the axial direction of the coil can be obtained by using the magnetic field molding in which a DC magnetic field (one-way magnetic field) is applied to that direction as mentioned above.

Also, the configuration in which the c-axis of the crystal orientation points to the direction with the coil members arranged side by side in the hexagonal ferrite substrates 23a and 23b is more preferable. The c-axis is a hard magnetization axis, and if the direction where the c-axis is oriented is the direction of side-by-side arrangement, the direction of the side-by-side arrangement becomes the direction with the lowest magnetic permeability. Therefore, according to such configuration, going-around of the magnetic flux and interference between each array-type coil member can be restrained more effectively. Such orientation state is the above planar orientation.

A state where the c-axes of the hexagonal ferrite are oriented in one in-plane direction of the substrate can be evaluated by X-ray diffraction. Suppose that a plane index of a diffraction peak is (HKL), in the case of X-ray diffraction on one plane of a substrate, if a ratio (Iₕₖ₀/I₀₀₁) between a diffraction peak intensity "Iₕₖ₀" from a specific plane (hk0) in parallel with the c-axis and a diffraction peak intensity "I₀₀₁" from a specific plane (001) orthogonal to the c-axis is larger than a case of the X-ray diffraction on another plane, it can be said that the c-axes are oriented in the above one in-plane direction.

A specific degree of orientation can be calculated as follows. For an orientation degree of ferrite in which the c-axis is oriented in one direction (the c-plane is oriented in parallel with one in-plane direction), an orientation degree f is calculated from Lotgering equation. First, in the X-ray diffraction pattern, an integral intensity sum of all the diffraction peaks derived from the hexagonal Z-type ferrite included in a range of 2θ = 20 to 80° is taken as ΣI (hk1) and the integral intensity sum of the diffraction peak of the (001) plane included in the range is taken as ΣI (001). Here, "I(001)" indicates a value integrated in a range from "θ(001) - 0.4°" to "θ(001) + 0.4°" when a peak angle of a diffraction line of the (001) plane is θ(001).

Next, P = ΣI (001) / ΣI (hk1) is defined, and the orientation degree f is calculated from the Lotgering equation (f = [P - P₀] / [1 - P₀]). For the Lotgering equation, see J. Inorg. Nucl. Chem., 1959, Vol. 9, pp. 113 to 123 (Non-patent Document 1). As mentioned above, P₀ (that is, P in the case of non-orientation) is calculated using the X-ray diffraction pattern measured for a state where the crystal orientation of crystal grains is at random, and here, 0.06 is used for P₀ from diffraction pattern data of the Z-type ferrite in Philips Res. Rep., 12 491 (1957) (Non-patent Document 2). The hexagonal ferrite substrate according to the present invention preferably has an oriented plane with such orientation degree f of 0.8 or more. Such orientation degree f is an index of plane orientation, and an index with a large number means higher plane orientation. In order to obtain a high magnetic permeability, the orientation degree f is preferably 0.84 or more.

The orientation degree of the ferrite in which the c-axes are oriented in one plane is acquired as follows. In the X-ray diffraction pattern with a measurement range for one face of the hexagonal ferrite substrate of 2θ = 20 to 80°, supposing that an integral intensity sum of all the diffraction peaks of the hexagonal ferrite is ΣI (HKL) (however, I(HKL) indicates an integral intensity of the diffraction peak represented by an index (HKL)) and the integral intensity sum of the diffraction peak of all the (HK0) with L = 0 is ΣI (HK0), the orientation degree fc_{⊥} obtained by fc_{⊥} = ΣI (HKO) / ΣI (HKL) is acquired. Here, as I(HKL) and when a peak angle of a diffraction line of the (HKL) plane is θ(HKL), a value integrated in a range from "θ(HKL) - 0.4°" to "θ(HKL) + 0.4°" is used.

If such orientation degree fc_{⊥} is larger than the orientation degree fc_{⊥} calculated from the X-ray diffraction in another plane, the c-axes are considered to be oriented in the one in-plane direction. Also, the large orientation degree fc_{⊥} indicates that orientation of the c-axes in the one in-plane direction is remarkable. If the one in-plane direction in this case is the c-axis oriented plane, the orientation degree fc_{⊥} in the c-axis oriented plane is preferably 0.4 or more. If the orientation degree fc_{⊥} is 0.4 or more, the magnetic permeability in a direction orthogonal to the plane where the X-ray diffraction is conducted becomes particularly high, and a magnetic permeability of 30 or more at a frequency of 100 kHz can be obtained, for example. A plane having such orientation degree is referred to as the c-axes oriented plane. The degree is more preferably 0.45 or more so as to have the configuration suitable for obtaining the magnetic permeability of 35 or more.

Moreover, in two planes orthogonal to the c-axis oriented plane and also orthogonal to each other (hereinafter referred to as an orthogonal plane), the orientation degree fc_{//} calculated from fc_{//} = I(0018) / I (110) in the X-ray diffraction is preferably 0.3 or more. The larger orientation degree fc_{//} indicates that there are more crystal grains with the c-axis oriented to the direction orthogonal to the orthogonal plane. Since this condition is satisfied in two planes at least orthogonal to each other, random orientation of the c-axis is ensured. By this arrangement, even in the direction in parallel with the c-axis oriented plane, high magnetic permeability can be obtained.

If an object to be evaluated is small, evaluation on presence of orientation can be made by measuring an orientation of crystal grains present on an observation plane by EBSP (Electron Back Scattered Pattern) measurement in scanning electron microscope (SEM) observation. With such orientation analysis, since an inclination amount of the c-axis of the crystal grains with respect to the direction orthogonal to an orientation analysis plane of a sintered body can be observed, the oriented state of the crystal grains can be evaluated. In the orientation analysis, θ_{AV} = Σθn (θ) / Σn (θ) (Equation 1) is calculated.

Here, θ indicates an orientation angle difference between a direction orthogonal to the orientation analysis plane of the hexagonal ferrite substrate constituted by the sintered body and the C-axis direction of the hexagonal ferrite substrate at a measurement point of the EBSP, and n(θ) indicates the number of measurement points showing the above θ. Also, Σθn (θ) and Σn (θ) indicate a sum of θn (θ) and n (θ) for all the θ in a section from 0° to 90°, respectively.

In the case of non-orientation, that is, isotropy, θ_{AV} becomes 45°. Therefore, if θ_{AV} in one plane of a substrate as the observation plane exceeds 45°, it means that the c-axes are oriented in the in-plane direction of that plane. Preferably, by setting the average orientation difference θ_{AV} at 65° or more, the c-plane is oriented in a direction orthogonal to the orientation analysis plane, and a hexagonal ferrite substrate excellent in the magnetic permeability in that direction can be obtained.

In such case, the c-axis is oriented in a direction in parallel with the orientation analysis plane, and the orientation analysis plane becomes the c-axis oriented plane. Moreover, if a value (SD/n_{AV}) obtained by dividing a standard deviation SD obtained by SD = {Σ(nΦ) - n_{AV}}² /m}^{1/2} (Equation 3) by an average value of measurement points given by n_{AV} = Σ(nΦ)/m (Equation 2) is 0.6 or less, it is ensured that the c-axes are oriented at random in a direction in parallel with the c-axis oriented plane.
Here, Φ is an angle when an orientation difference between a projection direction in the orientation analysis plane in the c-axis direction and a one straight line within the orientation analysis plane is taken as a positive acute angle, I(Φ) indicates the measurement points showing an orientation difference Φ, and m indicates divided points between 0 to 90°.

The one straight line may be arbitrary in the orientation analysis plane. By such arrangement, a high magnetic permeability can be obtained even in the direction in parallel with the c-axis oriented plane. Since SD becomes a large value if the measurement points are large, a value divided by n_{AV} corresponding to average measurement points is used as an index so that even results of the EBSP analysis of different measurement points can be compared with each other.

The average value n_{AV} of the measurement points is preferably set at approximately 4000. Also, by setting the average orientation difference θ_{AV} at 65° or more and SD/n_{AV} at 0.6 or less, the magnetic permeability at 100 kHz in the direction orthogonal to the c-axis oriented plane can be 30 or more, the magnetic permeability at 100 kHz in the direction in parallel with the c-axis oriented plane at 8 or more, and a ratio of the magnetic permeability in the direction in parallel with the c-axis oriented plane to the magnetic permeability in the direction orthogonal to the c-axis oriented plane at 0.15 or more. The ratio of the magnetic permeability in the direction in parallel with the c-axis oriented plane to the magnetic permeability in the direction orthogonal to the c-axis oriented plane is more preferably 0.20 or more. For the evaluation of EBSP, measurement may be conducted with 1 µm span using that with a beam diameter of 1 µm. An analysis region may be selected in a range of 0.01 to 0.3 × 10⁻⁶ m² according to an average grain size of the crystal grains so that 40 or more of the crystal grains are included in the analysis region, but in the present invention, an analysis region of 0.16 × 10⁻⁶ m² is employed as a condition with versatility for the orientation analysis.

The magnetic permeability of a sample in one direction may be evaluated by a method described below. That is, a gap is fabricated at a ring-shaped high-µ ferrite whose magnetic permeability is measured in advance, and winding is applied (hereinafter referred to as "yoke portion"). In the following example, Mn-Zn ferrite with the initial magnetic permeability of µᵢ = 8100 at 100 kHz is used as the yoke portion, for example. A material having a known magnetic permeability up to 60 is prepared as a standard sample and after the material is worked so that the sectional shape matches a gap portion of the yoke portion, the material is inserted into the gap portion, an inductance value at 100 kHz is measured, and a calibration curve of the magnetic permeability and the inductance value is prepared.

Here, a sample with an unknown magnetic permeability to be measured is worked to be contained in the gap portion similarly to the above, inductance L at 100 kHz is measured, and the magnetic permeability is calculated referring to the calibration curve. With regard to a frequency characteristic of the magnetic permeability, a ring-shaped sample is fabricated and measurement is conducted by an impedance meter 4291B (by Agilent) from 10 MHz to 1.8 GHz.

The hexagonal ferrite substrate can be fabricated using a conventional powder metallurgic method. If Z-type ferrite and the like oriented as the hexagonal ferrite substrate is used, the hexagonal ferrite substrate can be obtained as follows, for example. A green body obtained by molding a powder of the hexagonal ferrite having an easy magnetization plane in a one-way magnetic field is sintered to obtain the oriented hexagonal ferrite. The molding in the one-way magnetic field may be carried out by pressurization molding in a DC static magnetic field, for example. In this case, the obtained hexagonal ferrite has the c-planes aligned in parallel with the applied magnetic field direction and the c-axes oriented isotropic in the in-plane direction orthogonal to that direction.

If anisotropy of shape is large such as in a case where a powder shape of the hexagonal ferrite is a plate-like shape in the c-plane direction, by lateral magnetic-field molding (pressurizing direction is orthogonal to applied magnetic-field direction), the c-axes can be oriented in a pressurization direction, which is one direction, by pressurization molding. By longitudinal magnetic-field molding (pressurization direction is in parallel with the applied magnetic-field direction), it is possible to restrain orientation of the c-axes in a specific direction while the c-planes are in parallel with the applied magnetic-field direction.

On the other hand, orientation of the Z-type ferrite can be also effected by applying a rotating magnetic field from a direction orthogonal to the pressurizing direction at molding. As an application method of the rotating magnetic field, such method may be employed that a die filled with a hexagonal ferrite powder is rotated in a one-way magnetic field till immediately before start of pressurization or a magnetic-field applying device may be rotated. Alternatively, using a device capable of applying a magnetic field from a plurality of directions, the applied magnetic-field direction is switched by switching a circuit so as to apply the rotating magnetic field. In the case of the above orientation, the Z-type ferrite powder provided for molding preferably has configuration containing many single crystal grains. For that purpose, after reaction has been advanced in a calcined powder state so as to enlarge the crystal grain or after a sintered body is made once and then, it is crushed till a proportion of the single crystal grains becomes large to have the Z-type ferrite powder.

### [Examples]

70.2 mol%, 18.8 mol%, and 11.0 mol% of Fe₂O₃, BaCO₃, and Co₃O₄, respectively, were weighed as main components, and 3.0 mass% of Mn₃O₄, 0.4 mass% of Li₂CO₃, and 0.13 mass% of SiO₂ are added, respectively, to the main components and mixed for 16 hours by a wet ball mill. Mn₃O₄, Li₂CO₃, and SiO₂ may be added at crushing after calcination. Next, they were calcined for 2 hours in the air at 1200°C. This provisionally baked powder was crushed for 18 hours by the wet ball mill. A binder (PVA) was added to the fabricated crushed powder and granulated. After the granulation, the powder was compressed and molded and then, sintered for 3 hours in an oxygen atmosphere at 1300°C so as to obtain the Z-type ferrite sintered body (Example 1).

The Z-type ferrite sintered body obtained under the same condition as above was roughly crushed using a disk mill and the obtained roughly crushed powder was crushed by a vibrating mill so as to obtain a Z-type ferrite powder with a specific surface area by the BET method of 1080 m²/kg. Water and the PVA with 1 wt% were added to the obtained powder so as to fabricate ferrite slurry, which was wet-molded in the rotating magnetic field. The applied magnetic field was 0.5 MA/m. The obtained green body was sintered for 3 hours in oxygen at 1300°C so as to obtain a planar-oriented Z-type ferrite sintered body. The orientation degree was evaluated by the Lotgering method and a high orientation degree of f = 0.84 was obtained (Example 2).

Moreover, using the slurry, a DC magnetic field was applied to a direction orthogonal to a press direction for wet molding. The applied magnetic field was 0.84 MA/m. The obtained green body was sintered for 3 hours in oxygen at 1310°C so as to obtain a one-direction oriented Z-type ferrite sintered body (Example 3).

The obtained sintered body was crushed by a jaw crusher and roughly crushed by the disk mill so as to obtain a roughly crushed powder. Moreover, the roughly crushed powder was crushed by the vibrating mill and the powder crushed by the vibrating mill was further crushed for 2 hours and 50 minutes by the ball mill so as to obtain the Z-type ferrite powder with the specific surface area by the BET method of 2350 m²/kg. Water and the PVA with 1 wt% were added to the obtained powder so as to fabricate ferrite slurry, which was wet-molded by applying a uniaxial DC magnetic field in a direction orthogonal to the press direction. The applied magnetic field was 0.84 MA/m. The obtained green body was sintered for 3 hours in oxygen at 1300°C so as to obtain a one-direction oriented Z-type ferrite sintered body (Example 4).

Also, as a sample for comparison, a non-oriented Ni-Zn ferrite sintered body was prepared (Comparative Example 1).

Characteristics of the Z-type ferrite sintered bodies of Examples 1 to 4 fabricated as above and the non-oriented ferrite sintered body in Comparative Example 1 are shown in Table 1. With the sample in Examples 2 to 4, it can be confirmed that the initial magnetic permeability of the "magnetic-field applied direction" is larger than the initial magnetic permeability of the "magnetic-field orthogonal direction". By using these ferrite sintered bodies as a substrate for coil member and setting the "magnetic-field applied direction" as the sandwiching direction of the coil member, the initial magnetic permeability in the sandwiching direction of the coil member is configured larger than the initial magnetic permeability in the direction orthogonal to the sandwiching direction of the coil member.

**[Table 1]**

| | | Density 10³(kg/m³) | µᵢ (100MHz) | µᵢ (1GHz) | Orientation degree | | |
|---|---|---|---|---|---|---|---|
| | | | | | fc_{⊥} | fc_{//L} | fc_{//P} |
| Example 1 | | 5.16 | 16.7 | 10.4 | 0.21 | 0.52 | 1.12 |
| Comparative Example 1 | | 4.95 | 13.4 | 4.4 | - | - | - |
| Example 2 (planar orientation) | c-plane orientation direction (magnetic-field applied direction) | 5.00 | 28.9 | 21.8 | - | - | - |
| | c-axis orientation direction (magnetic-field orthogonal direction) | | 3 | - | | | |
| Example 3 (one-direction orientation) | c-plane orientation direction (magnetic-field applied direction) | 5.14 | 29.6 | 20.2 | 0.41 | 0.48 | 1.81 |
| | c-axis orientation direction (magnetic-field orthogonal direction) | | 12.5 | 7.5 | | | |
| Example 4 (one-direction orientation) | c-plane orientation direction (magnetic-field applied direction) | 5.05 | 42.7 | 17.6 | 0.66 | 1.46 | 1.85 |
| | c-axis orientation direction (magnetic-field orthogonal direction) | | 11.6 | 6.76 | | | |

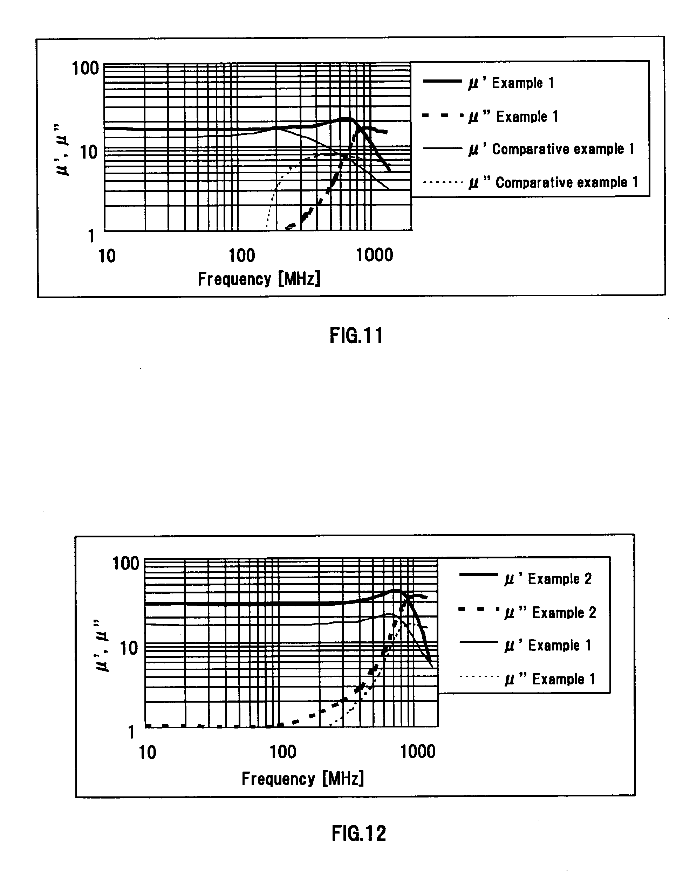

Figure 11 is a diagram for explaining a result of examination of a frequency characteristic of the initial magnetic permeability µᵢ of a sample obtained from Example 1 and Comparative Example 1. Here, µ' is a real component and µ" is an imaginary component of the initial magnetic permeability µᵢ, and for the initial magnetic permeability µᵢ, the ring-shaped sample was fabricated and measurement was made by the impedance meter 4291B (by Agilent) from 10 MHz to 1.8 GHz. As obvious from this graph, the initial magnetic permeability µᵢ of the Z-type ferrite sintered body of Example 1 at a high frequency has a value higher than that of the sample of Comparative Example 1.

Figure 12 is a diagram for explaining a result of examination of a frequency characteristic of the initial magnetic permeability µᵢ of a sample obtained from Example 2 and Example 1. Here, µ' is a real component and µ" is an imaginary component of the initial magnetic permeability µᵢ, and the initial magnetic permeability µᵢ was measured under the same condition as above. As obvious from this graph, the Z-type ferrite sintered body of Example 2 is confirmed to show higher initial magnetic permeability µᵢ than that of the non-oriented sample of Example 1.

In Table 1, for Examples 1, 3, and 4, as the orientation degree evaluated by the X-ray diffraction, the c-axis orientation degree in the applied magnetic-field direction for orientation is indicated as fc_{⊥}, the c-axis orientation degree in the orthogonal direction as fc_{//L} (direction orthogonal to press direction / applied magnetic-field direction, respectively) and fc_{//P} (press direction), respectively. The oriented Z-type ferrites in Examples 2 to 4 show the initial magnetic permeability µᵢ of 15 or more at 1 GHz, which is 1.5 times or more of the non-oriented Z-type ferrite of Example 1. The volume resistivity is 2 to 8 × 10⁴ Ω·m in any case, which is a sufficiently high value.

Particularly, in Example 4 with the specific surface area of the powder at 2300 m²/kg and the sintered body density of as high as 5.0 × 10³ kg/m³ or more, high initial magnetic permeability µᵢ of 40 or more at 100 MHz is shown. The orientation degree evaluated by the X-ray diffraction is known to be as high as 0.66. As mentioned above, by orienting the Z-type ferrite, the initial magnetic permeability µᵢ is drastically improved while a high-frequency characteristic is maintained.

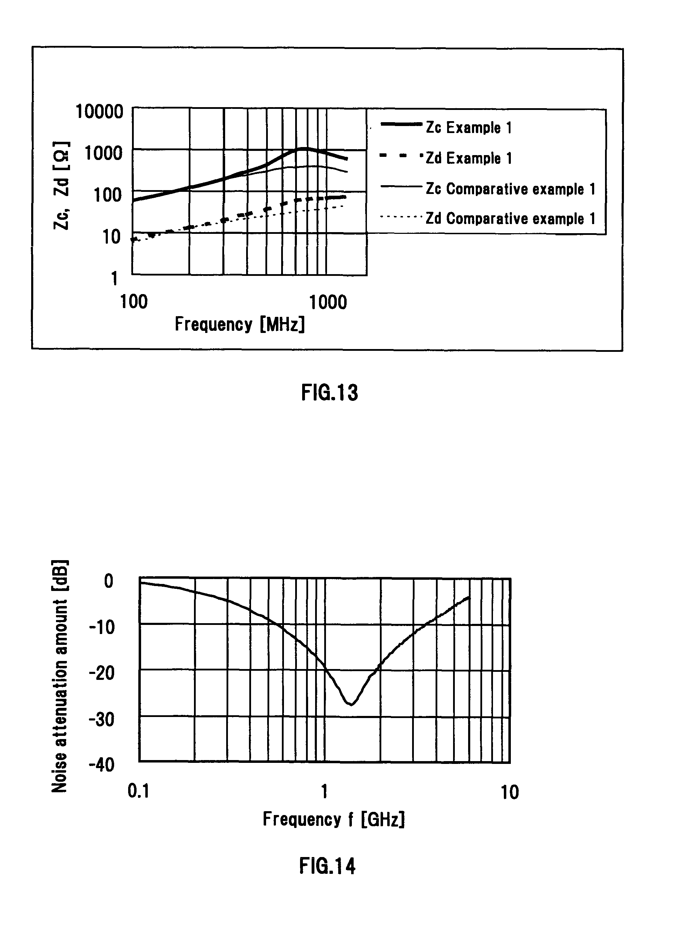

Figure 13 is a graph for explaining a result of evaluation by simulation of the frequency characteristic of common mode impedance (Zc) and differential impedance (Zd) of the common mode filter with the structure in Figure 4 for the Z-type ferrite having the characteristics in Figure 11 (Example 1 and Comparative Example 1). Simulation parameters were set at outside dimensions of 1.25 mm × 1 mm × 0.5 mm, thickness of the Z-type ferrite of 0.21 mm, thickness of the coil member constituted by using an insulating layer of 0.08 mm, the number of winding times of a flat spiral coil of 3, and a line width of 0.05 mm.

From the result of Figure 13, it is known that the common mode filter using the Z-type ferrite sintered body of Example 1 (Example 1) has a higher restraint effect of common mode noise at a high frequency than a case using the Ni-Zn ferrite (Comparative Example 1) since the common mode impedance at a high frequency is high.

Also, a relation between the orientation direction and common mode noise attenuation amount of the Z-type ferrite in a common mode filter was evaluated by simulation. The result is shown in Table 2. Here, the noise attenuation amount is a value at 1 GHz. The noise attenuation amount (dB) is shown in "-20log|Scc21|" using the S parameter (Scc21).

**[Table 2]**

| No. | Orientation mode | Orientation direction relation in coil component | Noise attenuation amount (dB) |
|---|---|---|---|
| 1 | Easy planar orientation | c-axis // x-direction | 14.2 |
| 2 | | c-axis // y-direction | 10.6 |
| 3 | | c-axis // z-direction | 4.6 |
| 4 | One-direction orientation | c-axis ⊥ x-direction | 13.0 |
| 5 | | c-axis ⊥ y-direction | 12.6 |
| 6 | | c-axis ⊥ z-direction | 15.1 |
| 7 | Non-orientation | - | 11.9 |

The "easy planar orientation" in Table 2 refers to a mode in which the directions of the c-axes are aligned in one direction and the c-faces are oriented in parallel with a one plane. Also, the "one-direction orientation" refers to orientation in which the directions of the c-axes are at random in a plane while the c-faces are in parallel with one direction. A substantially rectangular coil member with the number of winding times of 3 and a conductor width of 0.05 mm, longitudinal length of 1.25 mm and lateral length of 1 mm was assumed as simulation parameters, and the rectangular longitudinal direction as x-direction, the transverse direction as y-direction, and a direction orthogonal to the x-direction and the y-direction, that is, the direction where the hexagonal ferrite substrates sandwich the coil member as z-direction. The initial magnetic permeability µᵢ in the orienting magnetic-field direction was set at 30, and the initial magnetic permeability µᵢ in the orthogonal direction was 1 for the easy planar orientation, 15.5 for the one-direction orientation, and 15 for the non-oriented initial magnetic permeability µᵢ.

In the No. 3 configuration in which the c-axes are oriented in the x-direction, which is a rectangular longitudinal direction, due to easy planar orientation (that is, the c-planes are oriented in the yz plane direction), the noise attenuation amount is drastically larger than that of the non-oriented No. 7 configuration. In the configuration of No. 4, No. 5, and No. 6 in which the c-axes are oriented in one in-plane direction, the noise attenuation amount in each case is increased as compared with the non-orientation case. Particularly, it is known that the No. 6 configuration in which the one in-plane direction where the c-axes are oriented is orthogonal to the sandwiching direction of the coil member (that is, the z-axis), the noise attenuation amount is particularly large.

Next, the results of evaluation of a relation between the orientation degree and the noise attenuation amount in the case of the planar orientation (c-axis // x-direction) and the case of one-direction orientation (c-axis ⊥ z-direction) are shown in Table 3. Here, with the non-oriented magnetic permeability at 15 and the initial magnetic permeability µᵢ of the orientation degree of 100% at 30, and a proportion of the initial magnetic permeability µᵢ in the orienting applied magnetic-field direction to that as the orientation degree, the initial magnetic permeability µᵢ was modeled. Also, the magnetic permeability of an intermediate orientation degree was modeled supposing that the magnetic permeability is in the orienting magnetic-field direction is decreased when the orientation degree is lowered, while the magnetic permeability in the orthogonal direction is increased.

**[Table 3]**

| No. | Orientation mode | Orientation degree (%) | Initial magnetic permeability (1 GHz) (magnetic-field applied direction) | Initial magnetic permeability (1 GHz) (magnetic-field applied direction orthogonal direction) | Noise attenuation amount (dB) |
|---|---|---|---|---|---|
| 8 | Planar orientation (c-axis // x-direction) | Non-orientation | 15 | 15 | 11.9 |
| 9 | | 70 | 21 | 19 | 14.3 |
| 10 | | 80 | 24 | 13 | 14.8 |
| 11 | | 90 | 27 | 7 | 14.7 |
| 12 | | 100 | 30 | 1 | 14.2 |
| 13 | One-direction orientation (c-axis ⊥ z-direction) | Non-orientation | 15 | 15 | 11.9 |
| 14 | | 70 | 21 | 20 | 14.2 |
| 15 | | 80 | 24 | 18.5 | 14.6 |
| 16 | | 90 | 27 | 17 | 15.0 |
| 17 | | 100 | 30 | 15.5 | 15.1 |

From Table 3, the noise attenuation amount is raised as the orientation degree is increased, and the effect of using the ferrite with anisotropy in orientation can also be confirmed in this examination. In the case of the planar orientation, the noise attenuation amount is increased with rise of the orientation degree, but when the orientation degree exceeds 80%, the noise attenuation amount is decreased to the contrary. With the orientation degree at 70% or above, the noise attenuation amount is increased by 2 dB or more as compared with the non-orientation, and with the orientation degree at 80 to 90%, the noise attenuation amount is increased by 2.5 dB or more as compared with the non-orientation case. On the other hand, in the one-direction orientation, the noise attenuation amount is raised as the orientation degree is increased, and the effect of using the ferrite having anisotropy in orientation can be confirmed. In the case of the one-direction orientation, the noise attenuation amount is increased as the orientation degree rises, and when the orientation degree exceeds 70%, the noise attenuation amount is increased by 2 dB as compared with the non-orientation and with the orientation degree of 80% or more, the noise attenuation amount is increased by 2.5 dB or more as compared with the non-orientation.

Figure 14 is a graph for explaining a result of evaluation of the characteristic by fabricating a common mode filter with the outside dimension of 1 mm × 1 mm × 0.8 mm using the ferrite in Example 4, and the result is obtained by sandwiching a coil member of 1 mm × 1 mm × 0.1 mm between two pieces of the hexagonal ferrite substrates of 1 mm × 1 mm × 0.35 mm, selecting the orienting direction of ferrite (direction in parallel with the c-plane) as the sandwiching direction, and measuring the noise attenuation amount of the common mode by a network analyzer. The noise attenuation amount indicates 20 dB at 1 GHz and 28 dB at 1.4 GHz, and a high noise attenuation characteristic of 19 dB or more is shown in a frequency band of 1 to 2 GHz.

The embodiments of the present invention have been explained referring to Examples, but Examples are merely examples for putting the present invention into practice, and the present invention is not limited to Examples. Variations of these Examples are in a scope of the present invention, and it is obvious from the above description that other various Examples are possible in the scope of present invention.

### Industrial Applicability

As mentioned above, by the present invention, a small-sized coil component that can exert high impedance characteristic even at a high frequency band and particularly a coil component used as a transducer, common mode filter and the like and its manufacturing method are provided.

## Claims

1. A coil component **characterized in that** a coil member having a plurality of coil lines laminated through an insulating layer is sandwiched by hexagonal ferrite substrates and said hexagonal ferrite substrate has anisotropy in a c-axis orientation of ferrite crystal grains.

2. The coil component according to claim 1, wherein said hexagonal ferrite substrate has an initial magnetic permeability in a sandwiching direction of said coil member larger than the initial magnetic permeability in a direction orthogonal to said sandwiching direction of the coil member.

3. The coil component according to claim 1, wherein said hexagonal ferrite substrate has the initial magnetic permeability in one direction orthogonal to said sandwiching direction of the coil member substantially equal to the initial magnetic permeability in said sandwiching direction of the coil member and the initial magnetic permeability in the other directions orthogonal to said sandwiching direction of the coil member smaller than the initial magnetic permeability of said sandwiching direction of the coil member.

4. The coil component according to claim 1, wherein said hexagonal ferrite substrate has c-axes of crystal orientation oriented in one in-plane direction.

5. The coil component according to claim 4, wherein said one in-plane direction is orthogonal to said sandwiching direction of the coil member.

6. The coil component according to claim 4, wherein said c-axes of the crystal orientation is oriented in one direction in said one in-plane direction.

7. The coil component according to claim 6, wherein a shape of said coil member seen from said sandwiching direction of the coil member is substantially rectangular or substantially oval, and said one direction is a rectangular longitudinal direction or oval longitudinal direction of said coil member.

8. The coil component according to any one of claims 1 to 7, wherein said coil members are arranged in plural side by side in a direction orthogonal to a direction where said hexagonal ferrite substrates sandwich said coil member.

9. The coil component according to claim 1, wherein said coil members are arranged in plural side by side in one direction orthogonal to a direction where said hexagonal ferrite substrates sandwich said coil member, and said hexagonal ferrite substrate has c-axes of the crystal orientation oriented in an in-plane direction orthogonal to said sandwiching direction of the coil member.

10. The coil component according to claim 1, wherein said coil members are arranged in plural side by side in one direction orthogonal to a direction where said hexagonal ferrite substrates sandwich said coil member, and said hexagonal ferrite substrate has c-axes of the crystal orientation oriented in said one direction.

11. A coil component **characterized in that** a coil member having a plurality of coil lines laminated through an insulating layer is sandwiched by hexagonal ferrite substrates, and said hexagonal ferrite substrate is Z -type ferrite and has an initial magnetic permeability at 1 GHz of 14 or more.

12. The coil component according to any one of claims 1 to 11, wherein said coil component is a common mode filter and an attenuation amount of common mode noise at 1 GHz is 14 dB or more.

13. A manufacturing method of a coil component comprising a process of obtaining a laminate body by laminating insulating material green sheets on which a conductor with a predetermined pattern is printed, a process of obtaining a coil member by sintering said laminate body, and a process of bonding a sintered body of hexagonal ferrite above and below said coil member.

14. The manufacturing method of a coil component according to claim 13, wherein a through hole through which the coil member penetrates in the lamination direction is provided on at least either one of an inner side and an outer side of a coil pattern of the coil member and filling of the through hole with the magnetic body and the bonding are carried out by an adhesive containing a magnetic body.

15. A manufacturing method of a coil component comprising a process of obtaining a laminate body by laminating insulating material green sheets on which a conductor with a predetermined pattern is printed and a process of sintering said laminate body in a state sandwiched by hexagonal ferrite sintered bodies.

16. The manufacturing method of a coil component according to claim 15, wherein the laminate body is obtained by printing a magnetic layer using a paste containing a magnetic body on at least part of the inner side and the outer side of a portion to be a coil pattern of the coil member in the insulating material green sheet and by laminating each insulating material green sheet contraposed by the printed magnetic layer.

17. The manufacturing method of a coil component according to claim 13 or 15, wherein a through hole is provided at least either one of the inner side and the outer side of a portion to be the coil pattern of the coil component in the laminate body, and a paste containing the magnetic body is filled in the through hole and then, sintered.

18. The manufacturing method of a coil component according to any one of claims 13 to 17, wherein said hexagonal ferrite has an easy magnetization plane and a sintered body of the hexagonal ferrite is obtained by sintering a green body obtained by molding a hexagonal ferrite powder in a one-way magnetic field.

19. The manufacturing method of a coil component according to any one of claims 13 to 18, wherein said hexagonal ferrite has an easy magnetization plane and a sintered body of the hexagonal ferrite is obtained by sintering a green body obtained by molding a hexagonal ferrite powder in a rotating magnetic field.
